Europäisches Patentamt

European Patent Office

Office européen des brevets

(19)

(11) Numéro de publication: **0 079 252**
**B1**

(12) **FASCICULE DE BREVET EUROPEEN**

(45) Date de publication du fascicule du brevet:
**02.01.85**

(51) Int. Cl.³: **F 16 L 33/02,** F 16 B 2/08

(21) Numéro de dépôt: **82401682.8**

(22) Date de dépôt: **16.09.82**

(54) **Collier de serrage.**

(30) Priorité: **06.11.81 FR 8120870**

(43) Date de publication de la demande:
**18.05.83 Bulletin 83/20**

(45) Mention de la délivrance du brevet:
**02.01.85 Bulletin 85/1**

(84) Etats contractants désignés:
**AT BE CH DE GB IT LI LU NL SE**

(56) Documents cités:
**EP - A - 0 003 192**
**DE - A - 2 511 575**
**FR - A - 2 456 279**

(73) Titulaire: **Etablissements CAILLAU S.A.R.L., 28, rue Ernest Renan, F-92130 Issy-les-Moulineaux (FR)**

(72) Inventeur: **Calmettes, Lionel, 3, rue des Glycines, F-77330 Ozoir-la-Ferriere (FR)**
Inventeur: **Andre, Michel, 140 bis, rue du 8-Mai, F-41200 Romorantin-Lanthenay (FR)**

(74) Mandataire: **Descourtieux, Philippe et al, CABINET BEAU de LOMENIE 55 rue d'Amsterdam, F-75008 Paris (FR)**

BUNDESDRUCKEREI BERLIN

## Description

La demande de brevet européen 3192 a décrit un collier de serrage réutilisable, constitué par une bande de métal enroulée sur elle-même et comportant, au voisinage de ses deux extrémités, deux parties de bande repliées radialement ou oreilles. La première desdites oreilles présente un prolongement dirigé selon la périphérie du collier pour constituer une semelle s'étendant au moins sur la distance séparant les deux oreilles. La seconde oreille présente, elle aussi, un prolongement sensiblement parallèle à la périphérie du collier et situé à une distance de celle-ci voisine de la hauteur d'une oreille. Ce prolongement de la seconde oreille est pourvu d'un coude qui constitue un organe d'agrafage venant coopérer avec la première oreille au moment du serrage du collier au moyen d'un outil prenant appui sur les deux oreilles.

La mise en place et le serrage d'un tel collier sont particulièrement aisés, notamment si les objets à serrer, tels que des tubes souples montés sur des tuyaux rigides, sont de petit diamètre. Dans le cas cependant d'objets de grand diamètre, on peut constater quelques difficultés pratiques. En effet, l'opérateur doit maintenir les extrémités de la bande en face l'une de l'autre, au moment où son outil de serrage prend appui sur les deux oreilles, pour effectuer l'agrafage du coude de la seconde oreille sur la première. Ces difficultés apparaissent notamment lorsque les objets à serrer sont peu accessibles, ce qui est le cas des raccordements de certains conduits des moteurs de véhicules automobiles.

Il est alors intéressant de disposer d'un collier dont la forme et, notamment, le diamètre, avant serrage sont voisins de ceux de l'objet à serrer, tout en leur étant légèrement supérieurs. La mise en place du collier puis son serrage ne nécessitent alors qu'une seule main, ce qui est avantageux dans les zones encombrées.

L'invention a donc pour objet un collier du genre de celui précédemment décrit, mais comportant un perfectionnement qui, notamment, facilite son montage.

L'invention consiste en un collier de serrage selon la revendication 1.

Dans ce collier de serrage, la semelle prolongeant la première oreille présente au moins une aspérité dirigée vers l'extérieur, susceptible de coopérer, à l'état non serré du collier, avec la butée d'au moins un logement prévu en correspondance dans la bande, en arrière de la seconde oreille.

Grâce à ces dispositions, le collier peut être présenté à l'utilisateur sous une forme voisine de celle qu'il aura après serrage. Les deux extrémités de la bande sont liées par la coopération provisoire de l'aspérité et du logement précité ce qui assure également l'alignement convenable de ces extrémités. Au cours du serrage de la façon décrite plus haut, l'agrafage du coude de la deuxième oreille sur la première oreille supprime la coopération de l'aspérité et de la butée du logement. En cas de modification, pour quelque raison que ce soit, de l'agrafage du coude, la coopération de l'aspérité et de la butée d'un logement correspondant peut à nouveau exister, ce qui constitue une sécurité supplémentaire du collier.

L'invention sera mieux comprise et diverses caractéristiques secondaires apparaîtront au cours de la description qui va suivre d'un mode de réalisation avantageux, donné uniquement à titre d'exemple, d'un collier perfectionné selon l'invention

A cet effet, on se référera au dessin annexé dans lequel:

— la figure 1 est une vue en perspective d'un collier immédiatement après sa fabrication;
— la figure 2 est une vue analogue à la figure 1, le collier étant prêt à être serré;
— la figure 3 est une vue analogue à la figure 2, après serrage du collier;
— la figure 4 est une coupe suivant IV-IV de la figure 3.

Si l'on se reporte au dessin, on voit un collier du genre de celui décrit dans la demande de brevet européen 3192. Il est constitué par une bande 1 comportant une première partie de bande repliée radialement ou oreille 2 et son prolongement 3 formant semelle, ainsi qu'un deuxième partie de bande repliée radialement ou oreille 4, son prolongement 5 et la partie courbée terminale 6 de celui-ci.

A l'extrémité libre de la semelle 3 est prévue une aspérité 7 constituée de préférence par un »crevé« réalisé par poinçonnage. En direction de l'oreille 2, l'extrémité ouverte du »crevé« présente une pointe 7a dont l'utilité apparaîtra plus loin.

En l'extrémité libre de la semelle 3 est prévue une aspérité 7 constituée de préférence par un »crevé« réalisé par poinçonnage. En direction de l'oreille 2, l'extrémité ouverte du »crevé« présente une pointe 7a dont l'utilité apparaîtra plus loin.

En arrière de la seconde oreille 4 sont prévus deux logements 8 et 9 apparaissant en saillie sur la face extérieure de la bande et, de préférence, constitués, eux aussi, par des »crevés« réalisés par poinçonnage. Le volume de ces logements ouverts sur la face intérieure de la bande est au moins égal au volume saillant de l'aspérité 7, cependant que leur bord antérieur 8a—9a formant butée est de préférence rectiligne.

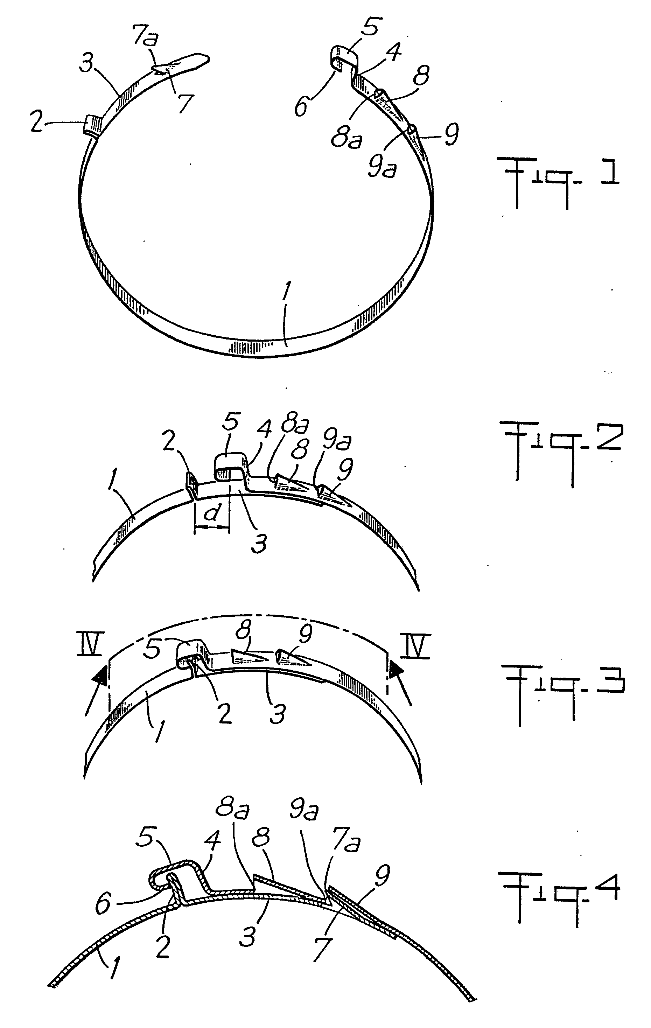

Après sa fabrication, le collier présente la forme visible sur la figure 1. En effet, l'élasticité du métal empêche pratiquement de maintenir une forme fermée à la suite de l'enroulement de la bande 1 sur elle-même. Ses deux extrémités sont donc relativement éloignées l'une de l'autre et il serait difficile, en l'état, d'agrafer la partie courbée 6 sur l'oreille 2 à l'aide d'un outil.

En général, le collier sera donc présenté à l'utilisateur après l'engagement de l'aspérité 7 dans le logement 8, la pointe 7a coopérant avec le bord 8a (figure 2). La forme et notamment le diamètre du collier ont alors des dimensions sensiblement supérieures aux dimensions correspondantes de l'objet à serrer. Le collier peut donc être enfilé par coulissement sur l'objet à serrer jusqu' à ce qu'il ait atteint l'emplacement désiré.

Le serrage est ensuite facilement effectué dans les conditions connues, un outil en forme de pince prenant appui derrière les oreilles 2 et 4 pour agrafer la partie courbée 6 sur l'oreille 2 (figure 3).

Dans certains cas, cependant, il peut être impossible d'enfiler le collier préalablement conformé selon la figure 2, sur l'objet à serrer. Il suffira, dans une telle éventualité de dégager l'aspérité 7 du logement 8, puis de faire passer le collier autour de l'objet à serrer. La coopération de l'aspérité 7 et du logement 8 sera ensuite rétablie par une opération manuelle, et le serrage sera enfin réalisé de la façon connue (figure 3).

Au cours du serrage, quelle que soit la méthode utilisée pour la mise en place du collier, l'aspérité 7 quitte le logement 8 vers l'arrière et vient se placer dans le logement 9. A cet égard, il convient de souligner que la butée constituée par le bord antérieur 9a ne doit pas coopérer en permanence avec l'aspérité 7. La position relative des logements 8 et 9 est donc définie de telle façon que la distance de leurs bords antérieurs 8a et 9a est très légèrement supérieure à la distance d séparant, avant serrage, l'oreille 2 de l'extrémité de la partie courbée 6.

Toutefois, en cas de modification, voulue ou non, de l'agrafage de la partie courbée 6 sur l'oreille 2, l'aspérité 7 coopère immédiatement avec la butée constituée par le bord antérieur 9a du logement 9, évitant ainsi l'ouverture intempestive du collier. Ces dispositions assurent donc une sécurité supplémentaire du collier.

Bien entendu, l'invention ne limite pas le nombre des aspérités ni le nombre des logements prévus en correspondance; de même, la forme de ces deux organes peut varier, à condition qu'elle permette leur coopération active dans les conditions expliquées plus haut.

## Revendications

1. Collier de serrage réutilisable, constitué par une bande de métal (1) enroulée sur elle-même et comportant, au voisinage de chaque extrémité de la bande, une partie de bande ou oreille (2, 4) repliée radialement, la première (2) desdites oreilles présentant un prolongement (3) dirigé selon la périphérie du collier pour constituer une semelle s'étendant au moins sur la distance séparant les deux oreilles, tandis que la seconde oreille (4) présente, elle aussi, un prolongement (5) sensiblement parallèle à la périphérie du collier et situé à une distance de celle-ci voisine de la hauteur d'une oreille, ce prolongement (5) de la seconde oreille comportant une partie courbée (6) de faible longueur, constituant un organe d'agrafage pouvant être amené en coopération avec la première oreille (2) au moyen d'un outil de serrage prenant appui sur les deux oreilles, caractérisé en ce que la semelle (3) prolongeant la première oreille (2) présente au moins une aspérité (7) dirigée vers l'extérieur de la bande susceptible de coopérer à l'état non serré du collier avec au moins un logement (8), formant butée, prévu en correspondance dans la bande (1), de l'autre côté du prolongement (5) par rapport à la seconde oreille (4).

2. Collier selon la revendication 1, caractérisé en ce que deux logements (8—9) sont prévus en arrière de la seconde oreille (4), l'une au moins des aspérités et l'un des logements correspondants entrant en coopération, après serrage du collier, en cas de modification de l'agrafage de la partie courbée (6) de la seconde oreille (4) sur la première oreille (2).

3. Collier selon l'une quelconque des revendications 1 et 2, caractérisé en ce que les aspérités (7) et/ou les logements (8—9) sont constitués par des »crevés« pratiqués dans la bande.

## Patentansprüche

1. Wiederverwendbares Klemmband, bestehend aus einem eingerollten Metallband (1), welches in der Nähe jedes Bandendes einen radial aufgebogenen Bandteil bzw. ein Ohr (2, 4) umfaßt, wobei das erste (2) der Ohren eine entlang des Umfanges des Bandes zur Bildung einer sich zumindest über die die beiden Ohren trennende Entfernung erstreckenden Sohle gerichtete Verlängerung (3) aufweist, wogegen das zweite Ohr (4) ebenfalls eine im wesentlichen parallel zum Umfang des Bandes verlaufende und in einer Entfernung von diesem nahe der Höhe eines Ohrs angeordnete Verlängerung (5) aufweist, wobei die Verlängerung (5) des zweiten Ohrs einen gekrümmten Teil (6) geringer Länge umfaßt, der ein Bördelverbindungsorgan bildet, das mit dem ersten Ohr (2) mit Hilfe eines auf den beiden Ohren zur Abstützung gelangenden Klemmwerkzeugs in Zusammenwirken gebracht werden kann, dadurch gekennzeichnet, daß die das erste Ohr (2) verlängernde Sohle (3) zumindest eine vom Band nach außen gerichtete Unebenheit (7) aufweist, die in nicht geklemmten Zustand des Klemmbandes mit zumindest einer einen Anschlag bildenden Aufnahme (8), die entsprechend im Band (1) auf der hinsichtlich des zweiten Ohrs (4) anderen Seite der Verlängerung (5) vorgesehen ist, in Zusammenwirken bringbar ist.

2. Klemmband nach Anspruch 1, dadurch gekennzeichnet, daß zwei Aufnahmen (8—9) hinter dem zweiten Ohr (4) vorgesehen sind, wobei zumindest eine der Unebenheiten und eine der entsprechenden Aufnahmen nach Klemmen des Klemmbandes bei einer Veränderung der Bördelverbindung des gekrümmten Teils (6) des zweiten Ohrs (4) am ersten Ohr (2) in Zusammenwirken treten.

3. Klemmband nach einem der Ansprüche 1
und 2, dadurch gekennzeichnet, daß die Unebenheiten (7) und/oder die Aufnahmen (8—9)
durch in das Band vorgenommene »Einschnitte«
gebildet sind.

## Claims

1. Re-usable clamp, constituted by a wound-
over metal band (1) and comprising, close to the
ends of said band, one part of band or lug (2, 4)
which is folded over radially, the first (2) of said
lugs having an entending portion (3) directed
along the periphery of the clamp in order to constitute a sole-plate which extends at least over
the distance separating the two lugs, whereas
the second lug (4) likewise presents an extending portion (5) which is substantially parallel to
the periphery of the clamp and situated at a distance therefrom which is nearly the height of one
lug, said extending portion (5) of the second lug
comprising a bent part (6) of small length, which
constitute a fastening member able to be
brought to cooperate with the first lug (2) by way
of a clamping tool bearing against the two lugs,
characterized in that the sole-plate (3) which extends from the first lug (2) has at least one asperity (7) facing outwardly of the band and adapted
to cooperate when the clamp is in the loosened
state, with at least one housing (8), forming abutment, and provided in corresponding manner in
the band (1) on the other side of extending portion (5) with respect to the second lug (4).

2. Clamp according to claim 1, characterized in
that two housings (8—9) are provided at the back
of the second lug (4), one at least of the asperities and one of the corresponding housings engaging, after tightening the clamp, for those
cases when the fastening of the bent part (6) of
the second lug (4) on the first lug (2) is modified.

3. Clamp according to any one of claims 1 or 2,
characterized in that asperities (7) and/or housings (8—9) are constituted by »slashes« made in
the band.

Fig. 1

Fig. 2

Fig. 3

Fig. 4